(19) Europäisches Patentamt / European Patent Office / Office européen des brevets

(11) **EP 4 370 477 B1**

(12) **EUROPEAN PATENT SPECIFICATION**

(45) Date of publication and mention
of the grant of the patent:
**15.01.2025   Bulletin 2025/03**

(21) Application number: **22744193.8**

(22) Date of filing: **14.07.2022**

(51) International Patent Classification (IPC):
**C03C 17/25** (2006.01)          **C09D 201/10** (2006.01)

(52) Cooperative Patent Classification (CPC):
**C03C 17/25; C03C 2217/425; C03C 2217/732;
C03C 2218/113**

(86) International application number:
**PCT/EP2022/069701**

(87) International publication number:
**WO 2023/285578 (19.01.2023 Gazette 2023/03)**

(54) **ANTIREFLECTIVE COATINGS**

ANTIREFLEXBESCHICHTUNGEN

REVÊTEMENTS ANTIREFLET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA TN**

(30) Priority:   **16.07.2021   SE 2130201**

(43) Date of publication of application:
**22.05.2024   Bulletin 2024/21**

(73) Proprietor: **Absolicon Solar Collector AB**
**871 33 Härnösand (SE)**

(72) Inventors:
• **JÄRN, Mikael**
  **129 49 Hägersten (SE)**
• **ZÄLL, Erik**
  **907 53 Umeå (SE)**
• **KARLSSON, Stefan**
  **352 34 Växjö (SE)**
• **TOUMINEN, Mikko**
  **120 60 Årsta (SE)**
• **SUNDIN, Mikael**
  **141 48 Huddinge (SE)**

(74) Representative: **AWA Sweden AB**
**Box 45086**
**104 30 Stockholm (SE)**

(56) References cited:
**US-A1- 2016 070 031     US-B1- 6 583 071**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The present invention relates generally to improvements in antireflective coatings useful in solar collectors.

Background of the invention

In modern society energy is consumed by people and industries, e.g., for producing various products, for transport and production of food. Energy could be produced in several forms and from different energy sources. For instance, electricity is often produced from hydroelectric power plants, combustion of coal, oil, or gas. Traditionally, heat has been produced from local combustion or district heating power plants.

With an increasing population and demands for services, energy consumption strongly increases which significantly negatively affects our environment. Combustion produces large amount of carbon dioxide and other greenhouse gases. Hydroelectric power plants require large territories to be drowned, etc.

In order to reduce our footprint and negative impression on our environment, demands have been raised for cleaner and environmentally friendly energy production. Today, renewable energy is produced from wind, sun, ocean waves, etc. The sun provides large amounts of energy to our planet in form of radiated sun beams. Solar radiation can be used by solar cells to generate electricity, e.g., in form of solar panels, or by solar collectors to generate thermal heat.

A concentrating solar collector uses mirrors, lenses, or combinations thereof, to focus the solar radiation in form of a point or a line. In trough-formed concentrating solar collectors a reflector is formed as a curved elongated mirror, which reflects the solar radiation on a receiver arranged along a focus-line of the reflector. The receiver is commonly a black tube filled with a transport fluid, such as water, glycol, or oil. The tube is heated by the concentrated solar radiation and the heat is transferred to the transport fluid that is circulated in a system where the heated transport fluid could be used. The heated transport fluid may be used both as process heat in industrial processes as for district heating.

The term" PTC" (Parabolic Trough solar Collector) will be used in this disclosure to denote a concentrating solar collector with a trough-formed reflector arranged to concentrate solar light onto a fluid tube. Typically, PTCs will be pivoted to track the sun during the day and are controlled by a solar tracking arrangement.

A parabolic trough solar collector comprises an elongated reflector, which reflective surface in a cross-section describes a parabolic curve. The reflector focuses direct sunlight on a focus. One example of closed PTC is disclosed in the patent publication WO2010047656 A1 and is protected by a cover glass, to withstand e.g., rain, snow, sand etc.

Solar collectors are one of the first and most mature technologies of solar energy and have increased importance in the shift towards sustainable energy sources and is essential for reaching carbon neutrality. In all categories, the optical performance of the materials is of outmost importance for the efficiency. The cover glass optical performance is one of these components. In summary the cover glass for solar collectors is supposed to transmit as much of the solar irradiance as possible (i.e., in the entire spectrum) while also provide mechanical stability and impact resistance, chemical resistance and easy-to-clean surfaces. The cover glass is typically a float glass or possibly a rolled flat glass where the major optical losses are due to reflection (ca. 4% for each side) and minor absorption due to $Fe_2O_3$ impurities. Therefore, anti-reflective (AR) coatings are generally applied and for solar collector purposes, broadband anti-reflection is especially wanted.

AR coatings can either be built up by single porous layers or by multiple thin films in order to achieve destructive interference of the reflected light. Sol-gel processing is a versatile, cheap and rapid method to create thin nanostructured films through a bottom-up approach using dip-, spin-, or spray-coating. It is a method that can be readily applied for anti-reflective coatings.

Porous $SiO_2$ is one of the most conventional anti-reflection coatings for glass, where a typical commercial glass has a refractive index of ca. 1.52 and the optimal broadband AR is obtained for a thin film with a thickness of $\lambda/4$ at the desired peak transmission wavelength. Such porous coatings frequently have disordered structures with pores open to the surface and generally need improvements to be more durable and more adapted for conditions of solar energy applications.

US6583071 discloses processes for forming a porous film with extremely low dielectric constant over a substrate. However, these films are not adapted in thickness for anti-reflective coatings and as such not adapted in porosity to improve usefulness in solar energy applications.

General description of the invention

It is an object of the present invention to provide improved porous coatings with a suitable surface smoothness and a consistent coating thickness that mitigate problems with water adsorption/desorption and adhesion of dirt from the environment in solar energy applications.

It is also an object of the invention to provide porous coatings with a controlled structural porosity and with pores not open to the ambient atmosphere.

It is another object of the present invention is to provide an improved antireflective coating on a cover glass for solar collectors that has a suitably high transmittance over the solar wavelength spectrum and suitable reductions in solar weighted reflectance.

In a first general aspect, the invention relates to an aerosol composition for antireflective coatings in solar energy applications obtained by a process of providing a sol gel composition comprising tetra alkyl orthosilicate $Si(OR)_4$, wherein R is an alkyl group with 1 to 4 carbon atoms, a micelle forming surfactant, an aqueous acidic solution and a low alkyl alcohol solvent; diluting the sol gel composition with the low alkyl alcohol to a suitable viscosity for aerosolization, preferably diluting 1:3 by weight; and aerosolizing the diluted sol gel composition to an aerosol with a droplet size in the range of 0.5 to 50 $\mu$m, preferably from 1 to 20 $\mu$m. In this general aspect, solar energy application means solar thermal collectors and photovoltaics.

The sol-gel composition comprises an amphiphilic block copolymer, preferably a block copolymer of ethylene glycol and propylene glycol, more preferably poly(ethylene glycol)- *block*- poly(propylene glycol)-block-poly(ethylene glycol) or a triblock copolymer comprising a central hydrophobic chain of polyoxypropylene surrounded by two chains of polyoxyethylene, such as at least one of Pluronic P123® and Polyoxamer 407. In one embodiment, the amphiphilic block copolymer is Pluronic P123®.

Preferably the tetra alkyl orthosilicate of the sol gel is tetra ethyl orthosilicate (TEOS), for example TEOS reagent grade 98%. Preferably, the low alkyl alcohol is ethanol and the aqueous acidic solution comprises hydrogen chloride and providing a pH of 1.5 to 2.5, preferably about 2.

The mass ratio between the micelle forming surfactant and the aqueous acidic solution is from 1:2 to 1:2.5. Preferably, the micelle forming surfactant is Pluronic P123® and/or Poloxamer 407. In one specific embodiment, the sol gel composition is prepared so the aerosol composition comprises Pluronic P123®, tetraethyl orthosilicate (TEOS, reagent grade 98%), diluted hydrochloric acid (HCl 0.01 M) and absolute ethanol (EtOH) in the mass ratios 1:3.1:2.25:18.65.

In another aspect, the invention relates to a method of manufacturing a high transmittance antireflective (AR) coating on at least one substrate, comprising pre-treating the substrate(s) with at least one method suitable to increase the surface hydrophilicity; providing an aerosol composition in any embodiment as previously described. Following the pre-treatment, the at least one substate one surface exposed to the aerosol composition so the aerosol composition is homogenously distributed to a surface covering film with a thickness of less than 300 nm. Preferably, the aerosol composition is admitted to contact the at least one substrate surface in a coating chamber for a predetermined sufficient time period to provide a surface covering wet film, by means of transport gas flow or with gravitational settlement. In a next step substrate(s) with the surface covering film is/are subjected to one or more drying steps at temperatures between room temperature and 100° C; then calcinating the substrate by gradually increasing the temperature to over 400 °C, but below the glass temperature (Tg) of the substrate to form a coated substrate. Glass temperature is alternatively referred to as "glass transition temperature" in literature.

In embodiments of the method, it comprises exposing at least one substrate with a controlled aerosol composition transport with a gas flow or by gravitation for a predetermined time period from 5 to 100 seconds, preferably 5 to 50 seconds.

In embodiments of the method, it comprises transporting the aerosol with a transport gas flow rate of 0.05 to 2 L/h, preferably 0.5 to 2 L/h, and most preferably about 1 L/h.

Preferably, the pre-treatment includes one or several steps wherein the surface is treated with at least one of a rinsing fluid, drying, air plasma cleaning. Various masking processes may be employed, such as application with brands of Resomer in a suitable solvent. The substrates may be coated on one or both sides. In important embodiments, the substates are cover glasses for solar collectors.

Preferably, following the application of the aerosolized particles on the substrate surface the lower alcohol solvent evaporates, while the amphiphilic block copolymer self-assembles in to controlled structures (such as micelles) within the film and the silicate forms a network. During the calcination process, the amphiphilic block copolymer is removed together with remaining water, and the controlled pore structure is formed. In embodiments of the method, a suitable carrier gas flow (such as $N_2$) is employed and adjusted to a suitable liquid feed flow and a suitable coating time inside a coating chamber was chosen to 15 s. After film forming, the substrates may be equilibrated for a short period and kept under control in a climate chamber at about ambient conditions before being transferred to a drying oven (60°C) where they were kept for another 24 hours. Finally, in one embodiment, the samples are calcinated in a high temperature oven by raising the temperature from room temperature to 450°C by 1°/min, then keeping the temperature at 450°C for 4 hours, where after the heating was switched of and the coating is finalized.

In another aspect, the invention is directed to a substrate treated with embodiments of the methods as described, using an aerosol composition as described to manufacture an antireflective, porous coating on the substrate with a closed pore structure, i.e., without pores open to the ambient atmosphere.

In embodiments of the invention, the substrate coating reduces the solar weighted reflectance according to ASTM G-173 AM1.5 direct solar spectrum of a substrate surface with at least 1.5 %, preferably at least 2.5, more preferably at least 3.5%.

In embodiments of the invention, the substrate coating has an average thickness of 80 to 160 nm, preferably 100 to 140 nm, more preferably 110 to 130 nm, and most preferably about 120 nm.

In embodiments of the invention the coated substrate has a diffraction peak in the interval of 1.2 to 1.8 q (nm$^{-1}$), preferably 1.3 to 1.5 (nm$^{-1}$) in a diffractogram from a GISAX analysis.

In embodiments of the coated substate, as coated with the described methods by any described aerosol composition, is a low iron flat glass substrate.

In embodiments of the invention the coated substrate has a transmittance ($T$) of at least 94% at wavelengths from 400 to 800 nm and an average transmittance ($T$) of at least 93% at a solar weighted spectrum according to ASTM G-173 AM1.5 direct solar spectrum.

In one embodiment of the invention the coated substrate has an average transmittance peak at 535 nm, an average coating thickness of 110 to 130 nm and a coating with a refractive index of 1.15 to 1.35. Ideally the average thickness is about 120 nm and the refractive index is 1.28. Preferably the reduction in solar weighted reflectance according to ASTM G-173 AM1.5 direct solar spectrum is from 2.5 to 3.5%

In embodiments of the invention the substrate has a coating with hexagonal mesoporous structure, wherein the hexagonal pores are elongated in a horizontal plane and closed to ambient air and wherein the porosity is in the range of 30 to 50%.

In embodiments of the invention, the substrate has a coating that is hydrophilic with a water contact angle of less than 5. Preferably, water contact angle is measured with a water contact angle goniometer with which a 3 $\mu$L droplet of water was deposited,

In embodiments of the invention the coated substrates are used as cover glasses in solar collectors.

Detailed and experimental description

*Description of drawings*

The invention is now described, by way of example, with reference to the accompanying drawings, in which:

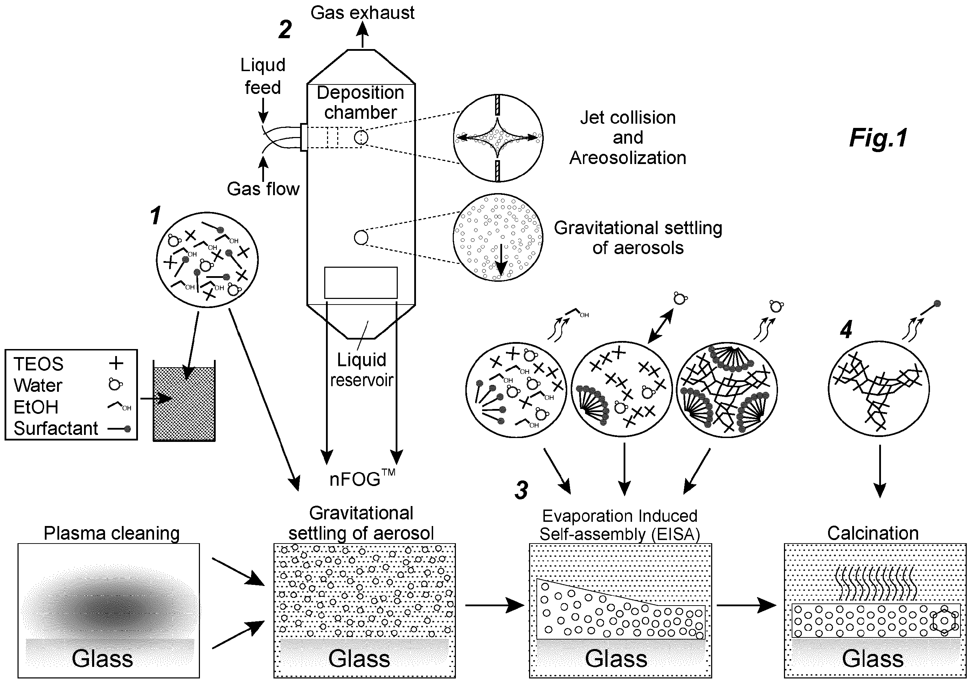

Figure 1 describes the synthesis process. 1. Mixing of the sol containing inorganic precursor (TEOS), ethanol, water, and surfactant at low pH, 2. Deposition of the sol using the aerosol method nFOG™, 3 Evaporation-induced self-assembly of micelles in an organized hexagonal network, 4. Decomposition of the organic template and stabilization of the inorganic network through calcination.

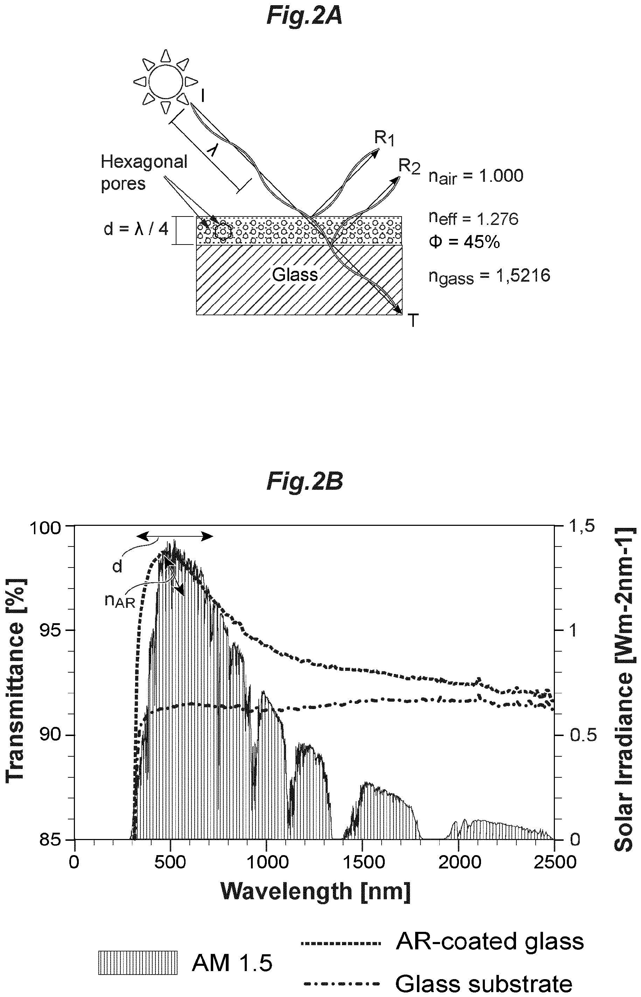

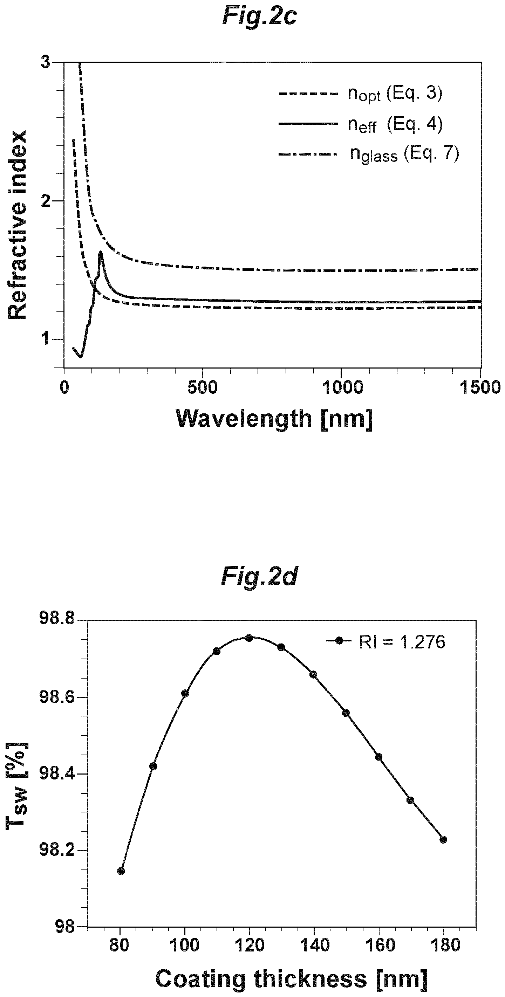

Figures 2A-D show the function and simulation of AR coatings. Fig. 2A shows the schematic principles of a single-layer AR coating with hexagonal closed pores. Fig 2b shows the light transmittance of flat glass and AR coated flat glass and the effect of the refractive index and thickness of the AR coating with the solar spectrum in the background. Fig 2c shows the calculated refractive indices of glass (using Eq. 7), hexagonally mesoporous SiO$_2$ (Eq. 3) and optimal refractive index as a function of wavelength for soda lime silicate based on the square root of Eq. 7 i.e., according to Eq. 2. Fig. 2d shows the simulated solar weighted transmittance evaluated through the Filmetrics calculated transmittance spectra in the wavelength range of 300-2500 nm (5 nm steps) is shown as a function of AR coating thickness.

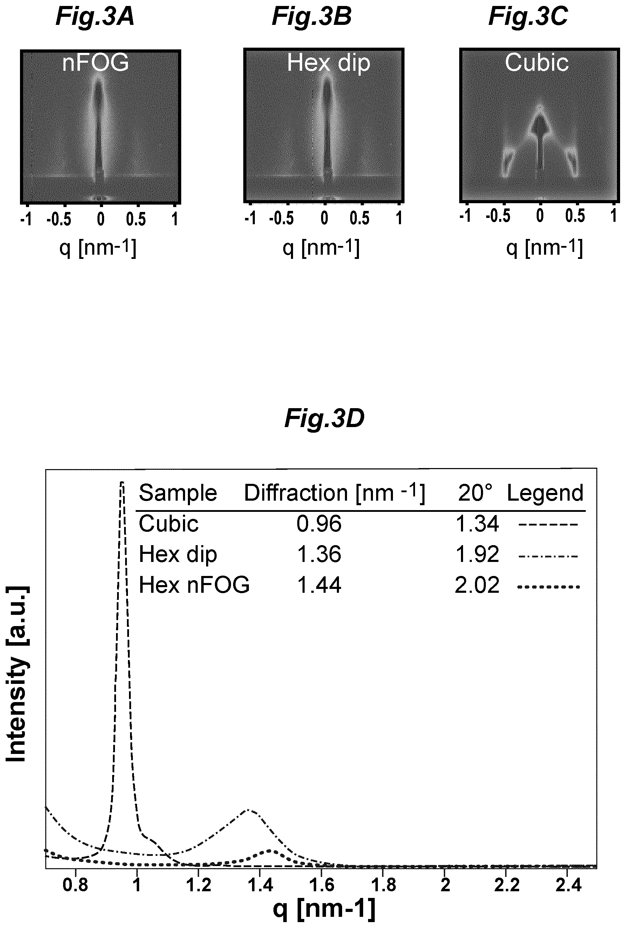

Figures 3A-D show pore structure characterization. Diffractograms of mesoporous silica films with hexagonal pore order (nFOG™-coated) in Fig. 3A, hexagonal pore order (dip coated) in Fig. 3B, and cubic pore order in Fig. 3C. Fig. 3D shows vertical integration (x=-0.002±0.04 nm-1) of the diffractograms in Figs.3A-D.

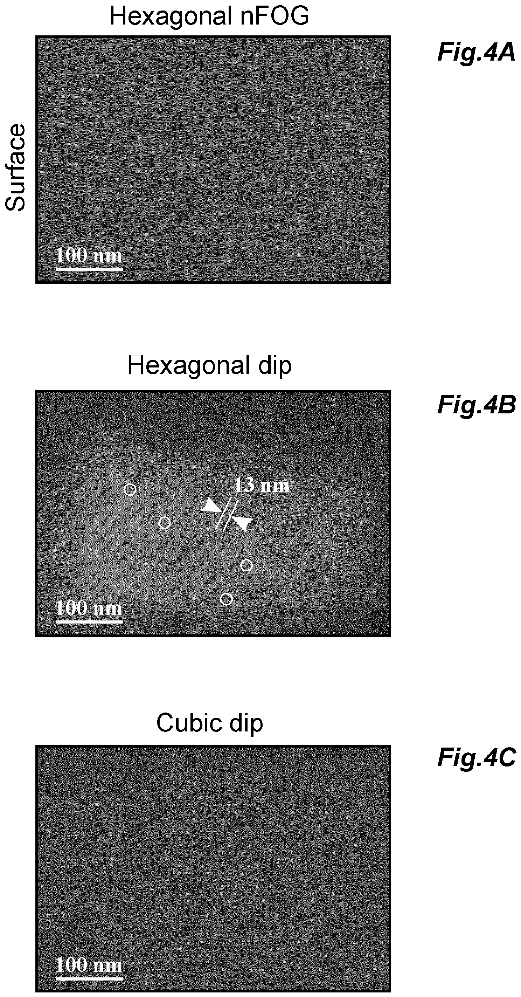

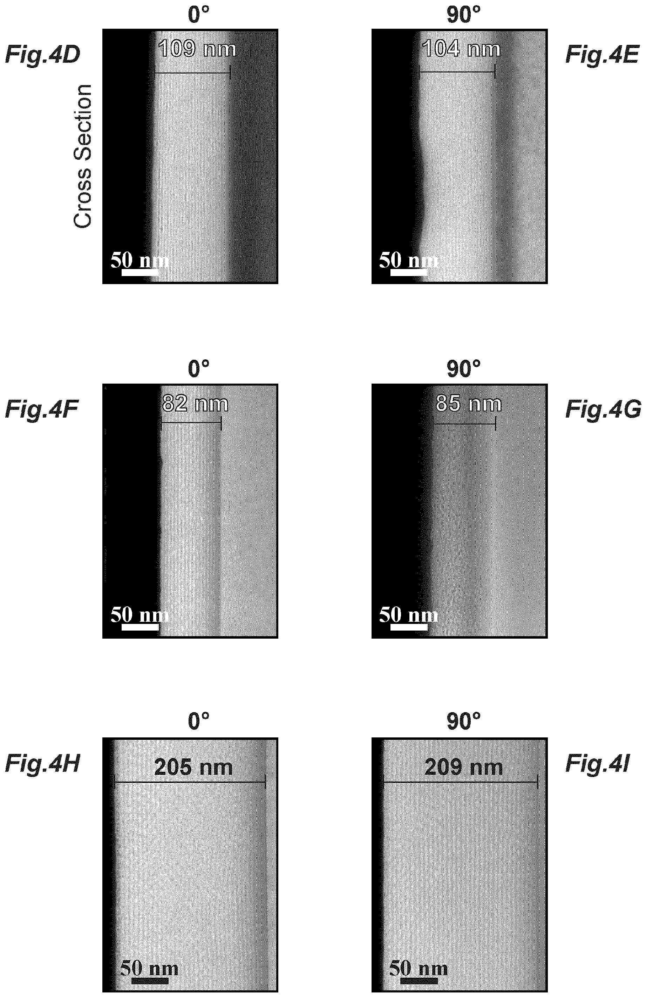

Figures 4A-4I show pore structure characterization with electron microscopy. SEM images of the coating surfaces, show that the nFOG™ deposited one is very smooth (Fig. 4A) while the dip-coated hexagonal one exhibit a largely closed surface with the occasional open pore and structure of elongated ridges with approximately 13 nm between the peaks (Fig. 4B). The dip-coated cubic coating exhibit open, evenly distributed pores (Fig. 4C). TEM images of the cross sections of nFOG™ (Figs. 4D-E), hexagonal dip-coated (Figs. F-G) and cubic dip-coated (Figs. H-I) show the pore structure of the coatings for lamellas cut perpendicular to each other. Only the dip-coated hexagonal coating exhibits a difference in porosity depending on the angle of the lamella. Note that the substrate is the brighter region to the right of the coatings in Figs. D-I).

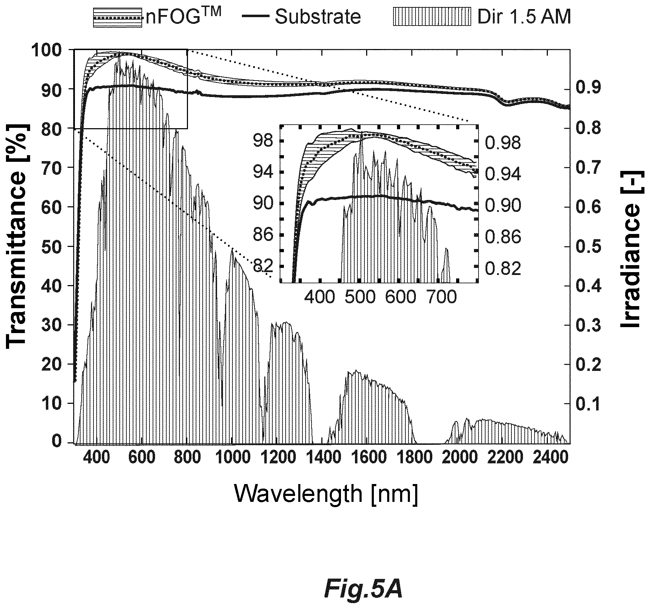

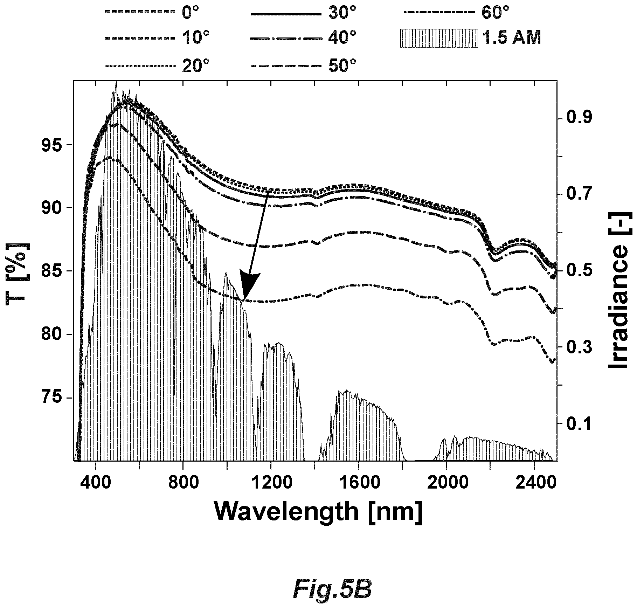

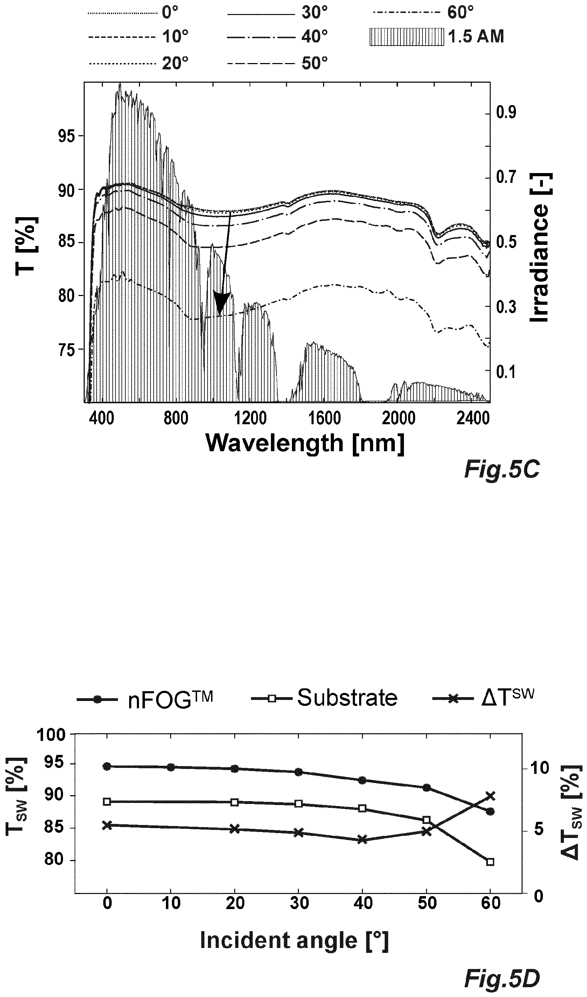

Figures 5A-5D show optical properties of the nFOG™ deposited hexagonal silica coating. Fig. 5A shows the average transmittance and standard deviation (dotted) of the nFOG™ coated samples presented together with the spectra of a low iron float glass substrate and the AM1.5 direct solar spectrum (see ASTM Standard G173, Standard Tables for Reference Solar Spectral Irradiances: Direct Normal and Hemispherical on 39° Tilted Surface, A. International, 2020).The transmittance spectra at incident angles of 0 to 60° for the low iron float glass substrate with (Fig 5B) and without (Fig. 5C) the nFOG™ deposited AR coating. Fig. 5D shows the angle dependent solar weighted transmittance of the substrate with and without the nFOG™ AR coating as well as the difference between the two shows that the benefit of the AR coating increases at high incident angles.

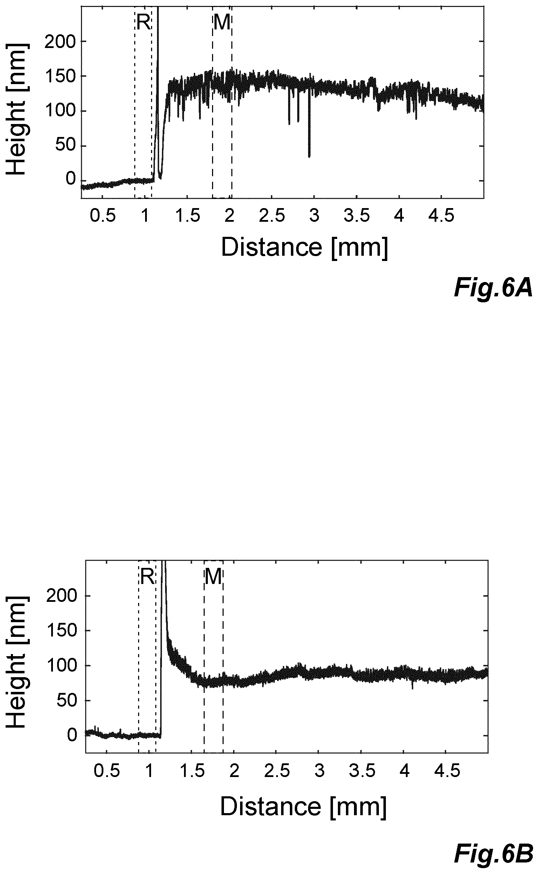

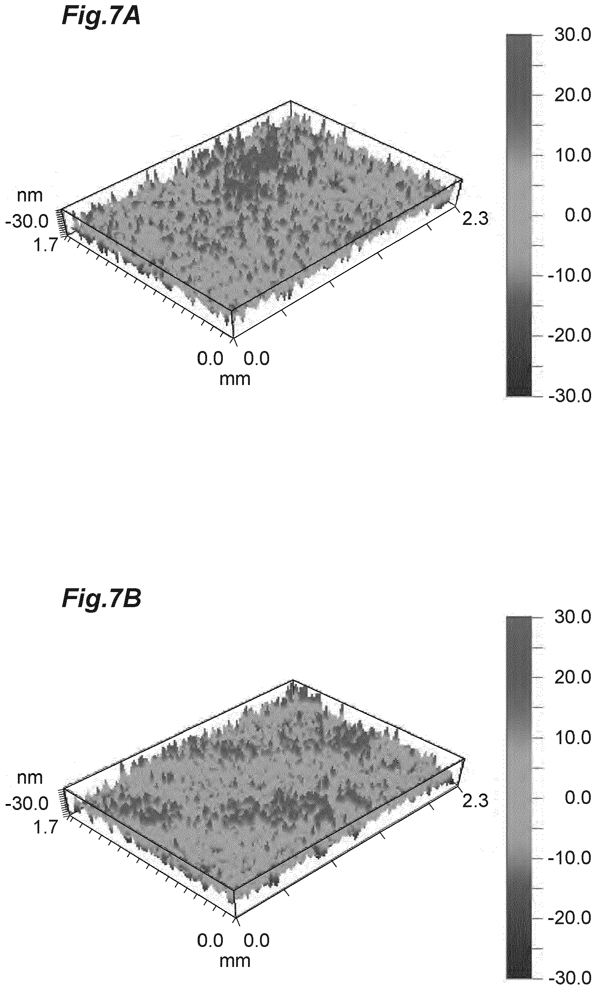

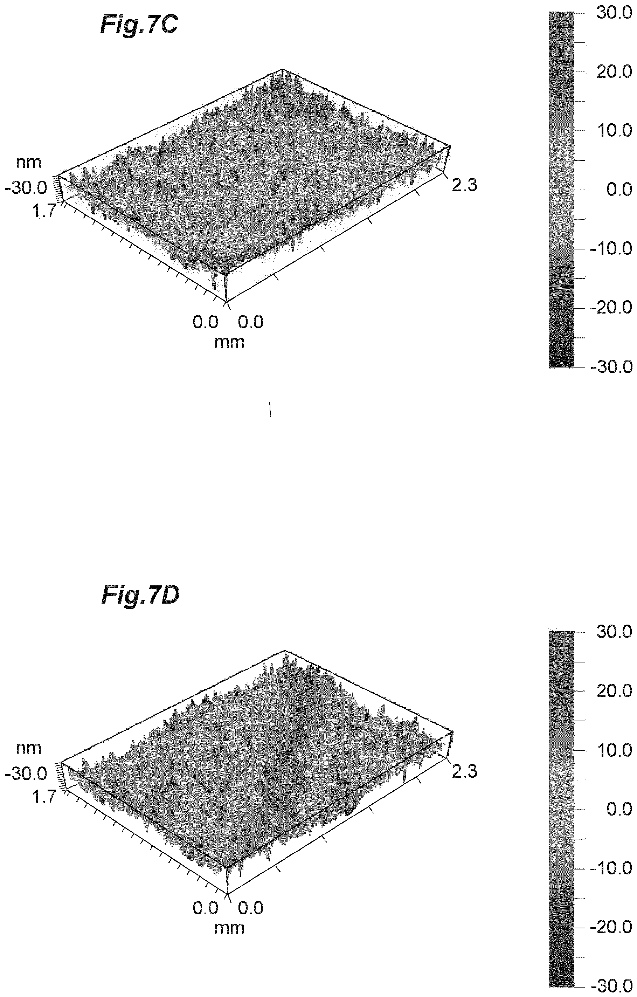

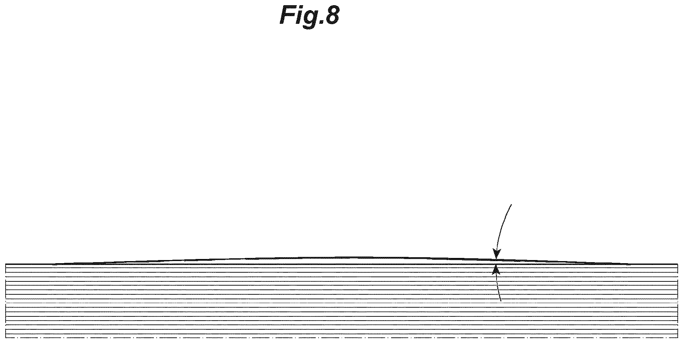

Figures 6A and 6B illustrate graphs of Profilometer measurement of hexagonal coatings deposited with nFOG™ (Fig. 6A) and dip-coating (Fig. 6B). Figures 7A-7D illustrate Optical profilometry images showing the surface topography of four locations on a hexagonal antireflective coating deposited by nFOG™. Note that the interference pattern from the optical profilometer creates some periodic surface topography as due to the limited reflections VSI mode was used. Figure 8 shows the contact angle in a representative droplet after reaching steady state on the nFOG coating AR coating.

*1. Introduction*

In the following experimental part of the invention, it is described how to obtain an ordered hexagonally structured silica coating with suitable characteristics, based on evaporation-induced self-assembly and how to optimize antireflective (AR) behavior with purpose of making AR thin films on float glass in parabolic solar collectors. The AR properties were optimized by simulating the transmittance for various thicknesses and refractive indices of the thin film, according to the effective medium theory. The thin films were prepared using the aerosol-assisted spray coating technique nFOG™, as described in Journal of Coatings Technology and Research, (2018). doi: 10.1007/s11998-017-0022 and dip-coating as a reference. The deposition mechanism of the aerosol was based on gravitational settling of droplets with a dual size distribution where smaller ones are ~1-2 $\mu$m in diameter and larger ones >10 $\mu$m, which leads to a very uniform coating thickness.

To further asses the structures of the resulting coatings Scanning Electron Microscopy (SEM), Transmission Electron Microscopy (TEM), and Gracing-Incidence Small Angle X-ray Spectroscopy (GISAXS) were used. The optical performance of the coatings was studied with UV-Vis-NIR transmittance in comparison to simulation and commercial alternatives. The film thickness of the coated layers and surface topography were studied by contact and optical profilometry, respectively.

*2. Description of experiments*

The glass substrate used was a 4 mm thick Pilkington Optiwhite, which is a commercial "low iron" flat glass [28] manufactured according to the float process [12]. Coatings were also applied on double polished silicon wafers (Wafernet, US), which were P-type Boron doped with a <100> direction.

*2.1 Synthesis and deposition of AR layers*

For the preparation of mesoporous SiO2 films, see Fig. 1 for the schematic procedure. The synthesis protocols by Alberius et al. in Chem. Matter, 2002, vol.14, pp. 3284-3294 and Hutchinson et al. in Thin Sold Films 2010, Vol. 518 pp. 2134-2140 were followed with small modifications. Films of hexagonal pore ordering were prepared by mixing Poloxamer 407, tetraethyl orthosilicate (TEOS, reagent grade 98 %), diluted hydrochloric acid (HCl 0.01 M) and absolute ethanol (EtOH) in the mass ratios 1:3.1:2.25:18.65. The final sol was aged for 3 days before use. The substrate (glass or silicon wafer) was cleaned by rinsing with isopropanol (IPA), ethanol and water, and dried with pressurized air. Just prior to coating, the substrate was air plasma cleaned for 5 min. Some samples were masked by applying a drop of Resomer 207 S (10 wt%) dissolved in acetone.

In the case of dip-coating, the substrate was dipped in the sol at room temperature using a dipping robot (Texture analyzer, Stable Microsystems, UK) at a speed of 45 mm/min.

In the case of nFOG™, the aged sol was diluted with ethanol 1:3 by weight just prior to use. The carrier gas (N2) flow was adjusted to 25 L/min, the liquid feed rate 1 L/h, and the coating time inside the chamber was chosen to 15 s. The samples (5 cm x 5 cm) were mounted in a soft Teflon frame in order to avoid coating of the backside. After coating, the samples were left in the prechamber of the nFOG™-equipment to equilibrate for 60 s, then they were transferred to a fume hood for drying. After coating both sides of the substrate, the samples were kept in a climate chamber with a controlled climate of 23°C and 90 % RH for 24 hours. The samples were then transferred to an oven (60°C) where they were kept for another 24 hours. Finally, the samples were calcined in a high temperature oven by raising the temperature from room temperature to 450°C by 1°/min, then keeping the temperature at 450°C for 4 hours, where after the heating was switched of.

For comparison reasons, thin films with pores of cubic ordering were synthesized by mixing Pluronic P123®, TEOS, HCl (0.01 M), and EtOH in the mass ratio 1:6.13:3.22:11.87. The substrate (silicon wafer) was dip-coated at 15°C at a speed of 45 mm/min and post treated in the same way as described above.

*2.2 GISAX*

Grazing-Incidence Small Angle X-ray Spectroscopy (GISAXS) measurements were performed on an Anton Paar SAXSpoint 2.0 system (Anton Paar, Graz, Austria) equipped with a Microsource X-ray source (Cu K-alpha radiation, wavelength 0.15418 nm) and a Dectris 2D CMOS Eiger R 1M detector with 75x75 $\mu$m pixel size. All measurements were performed with a beam size of approximately 500 $\mu$m diameter and a beam path pressure at about 1-2 mbar. The sample to detector distance (SDD) was 584 mm during the measurements. Samples were mounted on a sample plate on the GISAXS stage that was mounted on a VarioStage x-stage (Anton Paar, Graz, Austria). The samples were exposed to vacuum during measurement. For each sample, the total measurement time was 10 to 30 minutes. The software used for instrument control was SAXSdrive version 2.01.224 (Anton Paar, Graz, Austria), and post-acquisition data processing was performed using the software SAXSanalysis version 4.00.046 (Anton Paar, Graz, Austria).

*2.3 Electron microscopy*

The surface and bulk morphology of the mesoporous silica coating was investigated using SEM and TEM, respectively. The SEM imaging was performed on coatings deposited on silicon wafers to avoid charging and need of a conducting top layer. A Carl Zeiss Merlin FESEM (Field Emission Scanning Electron Microscope) was used, and the imaging was conducted using an acceleration voltage of 15 kV and an in-lens secondary electron detector.

The pore structure in the bulk of the coating was imaged using a Jeol TEM 1230 operating at 80 kV. Lamellas of 80 nm thickness was cut out of the surface using a focused ion beam (Thermo Fisher FEI Scios FIB-SEM) exposing the cross section of the coating. The lamellas were fused to a TEM grid ta facilitate imaging in the TEM. Considering the hexagonal pore structure of the coating, two lamellas oriented perpendicularly to each other was cut from each sample.

*2.4 Profilometry*

The film thickness of the mesoporous layers was evaluated with a Dektak XT (Bruker, US) stylus profilometer. The radius of the stylus was 2 $\mu$m and a force of 3 mg was applied with a scan length of 5 mm. The film thickness is reported as an average and standard deviation from at least three different scan lines over the edge between the substrate and the coating.

The surface roughness of the thin films was measured using an optical profilometer instrument from Bruker Corporation, NPFLEX 3D Surface Metrology System equipped with an objective with 5x magnification. The measurements were performed in the Vertical Scanning Interferometer (VSI) mode using Field of View option so that the magnification of the acquired surfaces is 2.7x. Post-processing was made in the software Vision using tilt only for plane fit and height scale user limits of $\pm$30 nm. In total four images of the size 1.7x2.3 mm were acquired, and the Rq-values (root mean square, rms) recorded as an average with the standard deviation as the error.

*2.5 UV-Vis_NIR*

The transmittance spectrum, T($\lambda$), was measured over 300-2500 nm with a step length of 5 nm using a Perkin Elmer Lambda 1050 spectrophotometer. From this transmittance spectrum, the solar weighted transmittance ($T_{sw}$) was calculated using

$$T_{SW} = \frac{\int_{\lambda_0}^{\lambda} T(\lambda) I_{AM1.5}(\lambda) d\lambda}{\int_{\lambda_0}^{\lambda} I_{AM1.5}(\lambda) d\lambda}, \tag{1}$$

where the IAM 1.5($\lambda$) is the ASTM G-173 AM1.5 direct solar spectrum and $\lambda$ to $\lambda 0$ is the wavelength range that is evaluated. The transmittance was measured at incident angles from 0 to 60°, with steps of 10°, to investigate its angle dependence.

*2.6 Simulations*

The following relations (Eq. 2 and Eq. 3) are well-known conditions for achieving an optimal AR coating and see Fig. 2a for a schematic picture of the principle.

$$n_{AR-coating} d = \frac{\lambda}{4}, \tag{2}$$

$$n_{AR-coating} = \sqrt{n_{substrate}}, \tag{3}$$

From these relations, we can see that by changing the refractive index of the coating the peak transmittance is directly affected while changing the thickness the peak is shifted to lower or higher wavelengths, see Fig. 2b.

Also, from Eq. 2 and 3 it becomes obvious that for any given refractive index of the AR coating there is an optimal AR coating thickness and vice versa. To simulate the refractive index of the AR coating the effective medium theory (EMT) was used. This method determines the effective index of refraction (neff) of a sub-wavelength structured geometry on the volume fill factors of multiple materials. Important to note, EMT is only valid when the period of the texture is much smaller than the wavelength of the light and it does not account for the size, shape, arrangement of subwavelength textured materials, or the polarization of the incident wave on a grating. In general, neff falls between the upper and lower indices of a subwavelength mixture of materials set by their respective bulk refractive indices for the constituent materials. There are many models for EMT but Garahan et al in Journal of Applied Physics 101 (2007) 014320. doi: 10.1063/1.240232 found that the volume averaging theory (VAT) shows good agreement with numerical finite element method simulations for both neff and the effective absorption index (keff). We have therefore used the VAT model to determine neff for our hexagonally mesoporous thin films according to Eq. 4,

$$n_{eff}{}^2(\lambda) = \frac{1}{2}\left[A(\lambda) + \sqrt{A(\lambda)^2 + B(\lambda)^2}\right], \qquad (4)$$

which is derived in ref [35]. Where A and B are determined via Eq. 5 and 6

$$A(\lambda) = \phi(n_{air}^2(\lambda) - k_{air}^2(\lambda)) + (1 - \phi)\left(n_{SiO_2}^2(\lambda) - k_{SiO_2}^2(\lambda)\right), \quad (5)$$

$$B(\lambda) = 2n_{air}(\lambda)k_{air}(\lambda)\phi + 2n_{SiO_2}(\lambda)k_{SiO_2}(\lambda)(1 - \phi), \qquad (6)$$

where φ is the porosity, as found in Hutchinson et al in Thin Solid Films 518 (2010) 2134-2140. doi: 10.1016/j.tsf.2009.08.006., 45 % was used for the hexagonal structured $SiO_2$. The refractive index of air (nair) was calculated from the dispersion equation for air, see Eq. 7

$$n_{air} - 1 = \frac{0.05792105}{238.0185 - \lambda^{-2}} + \frac{0.00167917}{57.362 - \lambda^{-2}}, \qquad (7)$$

and the absorption index of air ($k_{air}$) was set to 0. The refractive and absorption indices of $SiO_2$ ($n_{SiO2}$ and $k_{SiO2}$) was taken from Rodriguez-de Marcos et al. Opt. Mater. Express 6 (2016) 3622-3637. Given this information, $n_{eff}$ as a function of wavelength was computed using Eq. 4, see Fig. 2c. The refractive index of glass can be calculated to the third decimal for soda lime silicate glass (i.e. typical float glass) by use of a simplified dispersion equation (Eq. 8).

$$n_{glass} = 1.5130 - 0.003169\lambda^2 + 0.003962\lambda^{-2} \qquad (8)$$

Then we used the Filmetrics online Reflectance Calculator, Filmetrics Reflectance Calculator. (2020). KLA Corporation, https://www.filmetrics.com/reflectance-calculator, to calculate the transmittance spectra. It is based on the complex matrix form of the Fresnel equations. The input data was the refractive index of the glass substrate ($n_{glass}$=1.5216 at 632.8 nm as given from Eq. 8) and the refractive index of the AR thin film ($n_{eff}$= 1.276 at 632.8 nm as given from Eq. 4). Note that the reason for using 632.8 nm is because it is the operating wavelength of the He-Ne laser.

*2.7 Contact angle measurements*

Prior to measuring the contact angle the samples were rinsed in IPA, ethanol and deionized water for approx. 5 s with each liquid before being dried with pressurized air. The measurement was performed with a Dataphysics OCA 40 instrument with which a 3 μL droplet of water was deposited on the sample filmed during the process of reaching a stable droplet shape. Upon reaching steady state the contact angle was measured. The measurement was performed on three samples and at two locations on each sample resulting in a total of six measurements.

*3. Results and conclusions*

*3.1 Simulation*

In order to optimize the transmittance of solar photons for heat conversion in the solar collector, the entire solar spectrum is of interest. In the simulation, in order to simplify, a constant refractive index over the entire spectrum for both the substrate and the AR thin film, is assumed. The simulation is thus not simulating the real thin films on glass as our simplified simulation do not consider any absorption in the glass (e.g., iron impurities, inhomogeneities in the film structure or thickness etc. Instead, the purpose was to find optimal film thickness from a given effective refractive index of the thin film. Fig. 2c shows the refractive index as a function of wavelength and that our assumption of a constant refractive index is valid for most parts of the spectrum.

The transmittance spectra can be difficult to interpret in terms of optimization, so the solar weighted transmittance is used (see Eq. 1) as a figure of merit. The refractive index is determined by the porosity in the film, which is constant for our hexagonal coating. The porosity was estimated to 45 % by Hutchinson et al for similar films, see Thin Solid Films 518 (2010) 2134-2140, resulting in a refractive index of 1.276 used for the simulations. In Fig. 2d the shows the effect of the thickness of the AR coating on the solar weighted transmittance is presented. For the obtained refractive index 1.276 an optimum in AR will be achieved at a film thickness of 120 nm.

*3.2 GISAXS data and structural characterization*

GISAXS diffractograms of dip coated cubic and hexagonal samples resemble 2D-SAXS patterns and 1D-XRD (x-ray diffraction) intensity measurements reported in literature [21]. The pore ordering of the sample prepared with nFOG™ is hexagonal according to the GISAXS analysis, see Figures 3A-C. Minor differences can be observed in GISAXS diffractograms of the hexagonal samples, see Fig. 3D. It appears that the sampled prepared with nFOG™ has shorter lattice distances compared to the dip coated ones, as well as a somewhat higher degree of disorder, since the peak is shifted to the right at higher q values and is lower in intensity.

*3.3. Electron microscopy, thickness, and surface topography*

SEM imaging of the nFOG™ deposited AR coating shows a surface that is completely smooth with no open pores, apparent defects, or indication as to the underlying pore structure, see Fig. 4a. However, in Figs. 4d and 4e, TEM images of the cross section show elongated pores oriented horizontal to the substrate, indicating a hexagonal pore structure. There are regional differences, with distinct pores in some regions and a less ordered mesoporous structure in other. This is in line with the GISAXS data indicating a hexagonal but slightly disordered structure. Additionally, there is no significant difference in pore orientation between the lamellas perpendicular to each other. For a perfect hexagonal pore structure, the elongation of the pores in one direction would result in a visible difference, further supporting a somewhat less ordered structure.

From Figs. 4d and 4e, thicknesses of 109 nm and 104 nm was determined for the two nFOG™ lamellae. Evidently, the thickness varies slightly across the sample, which is also apparent from Fig. 4e. This thickness correlates reasonably well with the thickness measured with stylus profilometry of 129 $\pm$ 8 nm, see Figs 6a and 6b for a representative scan. Based on the trend of decreasing thickness further from the edge the difference is attributed to edge effects. It is also evident that the high smoothness apparent on the SEM (Fig. 4a) does not translate to the larger scale of the profilometer measurement (Figs 6a and 6b). However, optical profilometry measurements show that the coating has good thickness homogeneity, with an average root mean square roughness ($R_q$) value of 20.55$\pm$3.80 nm, which is in line with thin films deposited by dip-coating. 3D images of the measured surfaces can be seen in Figs 7a-7d.

The assumed porosity of 45 % gives a refractive index of 1.276, if we use that and the thicknesses of 104 and 109 nm in Eq. 2, the transmittance peaks are at wavelengths 531 and 556 nm, respectively. This is in good agreement with the peak of the AM1.5 direct solar irradiance spectrum and thus well adapted for solar thermal applications. However, based on our simulations, it is slightly below the ideal thickness of 120 nm, see Fig. 2d.

In Fig. 4b SEM image of the dip-coated sample exhibit a surface of elongated ridges with approximately 13 nm between the peaks, indicating a lattice parameter on the same order. This is in line with Hutchinson et al. and supports the assumption of a porosity of 45 %. The surface is largely closed, except for a few small circular pores, presumably created by the surfactant during the calcination as it evaporates and escapes from the underlying pores. This is in line with literature for a well-ordered hexagonal pore structure, both in terms of appearance and lattice parameter. Furthermore, the TEM images show that the pores are elongated and parallel to the substrate in one direction (Fig. 4f) while in the perpendicular direction, though not perfectly distinct, the pores resemble ellipsoids (Fig. 4g). This clearly indicates the directional differences of a hexagonal pore structure with cuts along and across the elongated pores.

The thicknesses of the dip coated hexagonal samples, shown in Figs. 4f and 4g, of 82 and 85 nm indicate a variation on a similar level to the nFOG™ samples. This thickness evaluation is in excellent agreement with the profilometer data of 82 $\pm$ 8 nm, see Fig 6a and 6b. The profilometer data also show that the surface of the dip-coated hexagonal film is smoother than the nFOG™ deposited one on the mm scale, unlike on the nm scale of the SEM imaging (figure 3e).

In Fig 4c, the SEM image of the coating with a cubic pore structure exhibit the characteristically organized open pores on the surface. However, in the TEM images of the cross section in Figs. 4h and 4i, only the lattice planes are distinguishable, because the lamella is not thin enough to reveal the individual pores. As expected for a symmetrical pore structure, no variation is seen between the perpendicular lamellae.

Based on the images in Fig. 4, the nFOG™ coating has a hexagonal, but slightly less ordered, pore structure than the dip-coated one. The most likely reason for this difference between the two deposition methods is the different drying processes. When dip coating, the evaporation occurs in a controlled way from the top downwards during withdrawal of the sample from the sol. In the nFOG™ process, the sample was left in the prechamber and allowed to equilibrate for 30 s while still being wet, and then taken out to dry in a fume hood. The resulting simultaneous evaporation over the entire horizontal nFOG™ sample could possibly disrupt the micelle formation during the gelation process, as opposed to the gradual vertical evaporation from the sol used for the dip-coating through which the micelles are evidently maintained. The gelation process is known to be sensitive to a variety of factors, and it is consequently reasonable that the change in deposition method, and more specifically the difference in drying, has an effect on the pore structure formed. Further optimization of the drying process could improve the order of the nFOG™ deposited films.

Regardless of how ordered it is, the nFOG™ coating is porous, exhibits a closed and smooth surface and has a thickness suitable for solar thermal applications. This is in stark contrast to the open pore structure of most commercial AR silica coatings used for solar thermal and other applications. The open pores have been associated with poor cleanability and increased sensitivity to humidity and pollution, whereas a low surface roughness, like the one of the nFOG™ coating, is associated with high cleanability. This issue can be managed with protective top coatings, like $TiO_2$, but at the expense of a decreased transmittance. The presented nFOG™ coating thus proposes a cheaper, easier, and more efficient potential solution.

*3.4 Optical properties*

In Fig. 5a the average transmittance spectrum of seven nFOG™ coated samples is presented together with the spectra of a low iron float glass substrate and the AM1.5 direct solar spectrum]. The substrate has a solar weighted transmittance of 89.5 % which on average is increased by 5.3 % to 94.8 % by the addition of the nFOG™ deposited mesoporous silica coating on both sides. A peak transmittance of 98.8 % at 535 nm is well adapted for solar thermal applications and agrees well with the TEM thickness measurements in Figs. 4d and 4e. This is in good agreement with simulations (Fig. 1d) and thickness measurements (Figs. 4d, 4e and S1) indicating a thickness slightly below the ideal 120 nm. Furthermore, this supports that the slightly greater thickness from the profilometry measurements is caused by edge effects.

The solar weighted transmittance of all nFOG™ samples fall within 94.5 and 95.1 % giving a reduction in solar weighted reflectance ($R_{SW}$) of 2.5-2.8 on each surface. The small interval in $T_{SW}$ and standard deviation, the shaded green area in Fig. 5a, demonstrates a high reproducibility. The deviation in transmittance still present, originates from a slight variation in thickness, causing the peak transmittance to occur between 480 and 570 nm, which is also reflected in the higher standard deviation outside of the average peak at 535 nm.

The $T_{SW}$ is significantly affected by the choice of substrate, as the differences can be several percent. However, the observed improvement of 5.3 % on average is in line with what have been reported for optimized single layer AR silica coatings. The $T_{SW}$ of two commercial coatings with open pore structure (Migo Glass and Sunarc) was measured to 94.0 - 94.4 % when deposited on the same substrate (evaluated with six samples each).

As solar collectors are commonly either stationary (flat) or one axis solar tracking (parabolic trough and Fresnel) a maintained transmittance at high incident angles is necessary for a cover glass. The transmittance spectra at incident angles from 0 to 60° are presented for the substrate with and without the AR nFOG™ coating in Figs. 5b and c, respectively. In both cases a largely maintained transmittance is observed up to an incident angle of 30°, after which it starts to slowly decrease before dropping significantly when moving from 50 to 60°. The coated sample exhibit a smaller drop than the substrate, especially at shorter wavelengths, <800 nm, where the intensity of the solar irradiance is at its largest.

The effect of this divergence in behavior is illustrated further in Fig. 5d where the $T_{SW}$ of both samples at the different wavelengths, as well as the difference between the two, are presented. At normal incident angle they exhibit 94.7 and 89.3 % transmittance, respectively. The $T_{SW}$ then progressively drops with each step of 10° in incident angle to 91.4 and 86.4 %, respectively at 50°, before dropping significantly to 87.7 and 79.8 % at 60°. Consequently, the benefit of the AR coating increases with incident angle, in line with what has previously been reported. Disregarding the destructive interference from an appropriate coating thickness (Eq. 2), the benefit of the AR coating can be shown to increase with incident angle using Fresnel's reflectance equations.

*3.5 Contact angle measurement on Pristine nFOG coatings*

The results from the experiments outlined above in paragraph 2.7 demonstrate that the contact angle of the nFOG deposited AR coating is below 5°, which is the lower measurable limit of the equipment used, see Fig.8. The extremely low contact angle results in a superhydrophilic surface where almost complete wetting is achieved. Having a superhydrophilic surface is preferable for a solar glass as it achieves a somewhat self-cleaning surface. This is due to the high wetting which results in the water spreading out in a film which makes it harder for dirt to attach to the surface, and it also improves cleanability of the surface. A hydrophobic surface is also self-cleaning, but the droplets cause scattering of light making hydrophilic surfaces preferable for solar thermal applications.

*4. Conclusions*

Accordingly, the present invention demonstrates, an antireflective (AR) mesoporous silica coating adapted for cover glass in solar thermal applications using nFOG™ and an aerosol-based deposition technique, has been shown. In preferred embodiments, the pore structure of the coating is hexagonal, though not perfectly ordered, and the top surface is smooth and closed without pores open to the atmosphere. The thickness is approximately 110 nm, slightly below the 120 nm which by simulation was determined to be the ideal thickness. In terms of optical properties, the coating is well adapted for solar thermal applications with a peak transmittance of 98.8 % at 535 nm and a solar weighted transmittance of approximately 95 % when applied on a low iron float glass substrate. At high incident angles the benefit of the AR coating increases, manifested in an improvement of 7.9 % in solar weighted transmittance relative to the substrate at 60° incident angle. To conclude, our results show that high quality AR coatings can be manufactured using the nFOG™ technique. nFOG™ has several advantages compared to conventional techniques like dip-coating, especially when it comes to scalability and materials saving. Furthermore, the closed pore structure and low surface roughness of the AR coating suggests a high cleanability and resistance to degradation from humidity.

**Claims**

1. An aerosol composition for antireflective coatings in solar energy applications obtained by a process of:

   - providing a sol gel composition comprising tetra alkyl orthosilicate Si(OR)4, wherein R is an alkyl group with 1 to 4 carbon atoms, a micelle forming surfactant, an aqueous acidic solution and a low alkyl alcohol solvent;
   - diluting the sol gel composition with the low alkyl alcohol to a suitable viscosity, preferably diluting 1:3 by weight; and
   - aerosolizing the diluted sol gel composition to an aerosol with a droplet size of 0.5 to 50 $\mu$m, preferably from 1 to 20 $\mu$m,
   wherein the mass ratio between the micelle forming surfactant and the aqueous acidic solution is from 1:2 to 1:2.5, and wherein the sol-gel composition comprises an amphiphilic block copolymer.

2. The composition according to claim 1, wherein the amphiphilic block copolymer comprises a block copolymer of ethylene glycol and propylene glycol, preferably poly(ethylene glycol)-*block*-poly(propylene glycol)-block-poly(ethylene glycol).

3. The composition according to claim 1 or 2, wherein the tetra alkyl orthosilicate is tetra ethyl orthosilicate (TEOS), the low alkyl alcohol is ethanol and aqueous acidic solution comprises hydrogen chloride and has a pH of 1.5 to 2.5, preferably about 2.

4. A method of manufacturing a high transmittance antireflective (AR) coating on a substrate for solar energy applications; comprising:

   - pre-treating the substrate with at least one method suitable increase the surface hydrophilicity;
   - providing an aerosol composition according to any one of claims 1 to 3;
   - exposing at least one substrate surface to the aerosol composition so the aerosol composition is homogenously distributed to a surface covering film with a thickness of less than 300 nm;
   - subjecting the substrate with the surface covering film to one or more drying steps at temperatures between room temperature and 100° C; and
   - calcinating the substrate by gradually increasing the temperature to over 400 °C, but below the glass temperature (Tg) of the substrate to form a coated substrate.

5. The method according to claim 4, comprising exposing at least one substrate with a controlled aerosol composition transport with a gas flow or by gravitation for a predetermined time period from 5 to 100 seconds, preferably from 5 to 50 seconds.

6. The method according to claim 5, comprising transporting the aerosol with a flow rate of 0.05 to 2L/h, preferably 0.5 to 2 L/h, and most preferably about 1 L/h.

7. A substrate treated with a method according any one of claims 4 to 6, using the composition of claims 1 to 3 to manufacture an antireflective, porous coating on the substrate with a closed pore structure, i.e., without pores open to the ambient atmosphere.

8. The substrate according to claim 7 wherein the coating reduces the solar weighted reflectance according to ASTM G-173 AM1.5 direct solar spectrum of a substrate surface with at least 1.5 %, preferably at least 2.5, more preferably at least 3.5%.

9. The substrate according to any one of claims 7 or 8, wherein the coating has an average thickness of 80 to 160 nm, preferably 100 to 140 nm, more preferably 110 to 130 nm, and most preferably about 120 nm.

10. The substrate according to any one of claims 7 to 9, having a diffraction peak in the interval of 1.2 to 1.8 q ($nm^{-1}$), preferably 1.3 to 1.5 ($nm^{-1}$) in a diffractogram from a GISAX analysis.

11. The substrate according to any one of claims 7 to 10 consisting of low iron flat glass.

12. The substrate according to any one of claims 7 to 10 with a transmittance ($T$) of at least 94% at wavelengths from 400 to 800 nm and an average transmittance ($T$) of at least 93% at a solar weighted spectrum according to ASTM G-173 AM1.5 direct solar spectrum.

13. The substrate according to any one of claims 7 to 12, having an average transmittance peak at 535 nm, an average coating thickness of 110 to 130 nm and a coating with a refractive index of 1.15 to 1.35.

14. The substrate according to any one of claims 7 to 13, having a coating with hexagonal mesoporous structure, wherein the hexagonal pores are elongated in a horizontal plane and closed to ambient air and wherein the porosity is in the range of 30 to 50%.

15. The substrate according to any one of claims 7 to 14, wherein the coating is hydrophilic with a water contact angle of less than 5.

16. Use of a substrate according any one of claims 7 to 15 as a cover glass in a solar collector.

**Patentansprüche**

1. Aerosolzusammensetzung für Antireflexbeschichtungen in Solarenergieanwendungen, erhalten durch folgendes Verfahren:

   - Bereitstellen einer Sol-Gel-Zusammensetzung, die Tetraalkylorthosilikat Si(OR)4, worin R eine Alkylgruppe mit 1 bis 4 Kohlenstoffatomen ist, ein mizellenbildendes oberflächenaktives Mittel, eine wässrige saure Lösung und einen niederen Alkylalkohol als Lösungsmittel enthält;
   - Verdünnen der Sol-Gel-Zusammensetzung mit dem niederen Alkylalkohol auf eine geeignete Viskosität, vorzugsweise Verdünnen im Verhältnis 1:3 nach Gewicht; und
   - Aerosolisieren der verdünnten Sol-Gel-Zusammensetzung zu einem Aerosol mit einer Tröpfchengröße von 0,5 bis 50 $\mu$m, vorzugsweise von 1 bis 20 $\mu$m,
   wobei das Massenverhältnis zwischen dem mizellenbildenden Tensid und der wässrigen sauren Lösung von 1 : 2 bis 1 : 2,5 beträgt,
   und wobei die Sol-Gel-Zusammensetzung ein amphiphiles Blockcopolymer umfasst.

2. Zusammensetzung nach Anspruch 1, wobei das amphiphile Blockcopolymer ein Blockcopolymer aus Ethylenglykol und Propylenglykol, vorzugsweise Poly(ethylenglykol)-Block-Poly(propylenglykol)-Block-Poly(ethylenglykol), umfasst.

3. Zusammensetzung nach Anspruch 1 oder 2, wobei das Tetraalkylorthosilikat Tetraethylorthosilikat (TEOS) ist, der niedere Alkylalkohol Ethanol ist und die wässrige saure Lösung Chlorwasserstoff umfasst und einen pH-Wert von 1,5 bis 2,5, vorzugsweise etwa 2, aufweist.

4. Verfahren zur Herstellung einer Antireflexbeschichtung (AR-Beschichtung) mit hoher Durchlässigkeit auf einem Substrat für Solarenergieanwendungen, umfassend:

- Vorbehandeln des Substrats mit mindestens einem Verfahren, das geeignet ist, die Hydrophilie der Oberfläche zu erhöhen;
- Bereitstellen einer Aerosolzusammensetzung nach einem der Ansprüche 1 bis 3;
- Aussetzen mindestens einer Substratoberfläche der Aerosolzusammensetzung, so dass die Aerosolzusammensetzung homogen zu einem oberflächenbedeckenden Film mit einer Dicke von weniger als 300 nm verteilt wird;
- Unterziehen des Substrats mit dem oberflächenbedeckenden Film einem oder mehreren Trocknungsschritten bei Temperaturen zwischen Raumtemperatur und 100° C; und
- Kalzinieren des Substrats durch allmähliches Erhöhen der Temperatur auf über 400 °C, jedoch unterhalb der Glastemperatur (Tg) des Substrats, um ein beschichtetes Substrat zu bilden.

5. Verfahren nach Anspruch 4, umfassend das Aussetzen mindestens eines Substrats mit einer kontrollierten Aerosolzusammensetzung, die mit einem Gasstrom oder durch Schwerkraft transportiert wird, für eine vorbestimmte Zeitspanne von 5 bis 100 Sekunden, vorzugsweise von 5 bis 50 Sekunden.

6. Verfahren nach Anspruch 5, umfassend das Transportieren des Aerosols mit einer Durchflussrate von 0,05 bis 2 l/h, vorzugsweise 0,5 bis 2 l/h, und am meisten bevorzugt etwa 1 l/h.

7. Substrat, das mit einem Verfahren nach einem der Ansprüche 4 bis 6 behandelt wurde, wobei die Zusammensetzung nach den Ansprüchen 1 bis 3 verwendet wird, um eine antireflektierende, poröse Beschichtung auf dem Substrat mit einer geschlossenen Porenstruktur herzustellen, d.h. ohne zur Umgebungsatmosphäre offene Poren.

8. Substrat nach Anspruch 7, wobei die Beschichtung den sonnengewichteten Reflexionsgrad gemäß ASTM G-173 AM1,5 des direkten Sonnenspektrums einer Substratoberfläche um mindestens 1,5 %, vorzugsweise mindestens 2,5 %, noch bevorzugter mindestens 3,5 %, verringert.

9. Substrat nach einem der Ansprüche 7 oder 8, wobei die Beschichtung eine durchschnittliche Dicke von 80 bis 160 nm, vorzugsweise 100 bis 140 nm, noch bevorzugter 110 bis 130 nm und am meisten bevorzugt etwa 120 nm aufweist.

10. Substrat nach einem der Ansprüche 7 bis 9 mit einem Beugungspeak im Intervall von 1,2 bis 1,8 q (nm$^{-1}$), vorzugsweise 1,3 bis 1,5 (nm$^{-1}$), in einem Diffraktogramm aus einer GISAX-Analyse.

11. Substrat nach einem der Ansprüche 7 bis 10, bestehend aus eisenarmem Flachglas.

12. Substrat nach einem der Ansprüche 7 bis 10 mit einer Transmittanz *(T)* von mindestens 94 % bei Wellenlängen von 400 bis 800 nm und einem durchschnittlichen Transmissionsgrad *(T)* von mindestens 93 % bei einem sonnengewichteten Spektrum gemäß ASTM G-173 AM1.5 direktes Sonnenspektrum.

13. Substrat nach einem der Ansprüche 7 bis 12 mit einer durchschnittlichen Durchlässigkeitsspitze bei 535 nm, einer durchschnittlichen Beschichtungsdicke von 110 bis 130 nm und einer Beschichtung mit einem Brechungsindex von 1,15 bis 1,35.

14. Substrat nach einem der Ansprüche 7 bis 13 mit einer Beschichtung mit hexagonaler mesoporöser Struktur, wobei die hexagonalen Poren in einer horizontalen Ebene langgestreckt und gegenüber der Umgebungsluft geschlossen sind und wobei die Porosität im Bereich von 30 bis 50 % liegt.

15. Substrat nach einem der Ansprüche 7 bis 14, wobei die Beschichtung hydrophil ist und einen Wasserkontaktwinkel von weniger als 5 aufweist.

16. Verwendung eines Substrats nach einem der Ansprüche 7 bis 15 als Abdeckglas in einem Sonnenkollektor.

**Revendications**

1. Composition d'aérosol destinée aux revêtements antireflets pour les applications dans le domaine de l'énergie solaire, obtenue par un procédé consistant à :

- fournir une composition de gel soluble comprenant un orthosilicate tétra-alkylique Si(OR)4, dans laquelle R représente un groupe alkyle avec 1 à 4 atomes de carbone, un surfactant formant des micelles, une solution aqueuse acide et un solvant à faible teneur en alcool alkylique ;
- diluer la composition de gel soluble avec l'alcool faiblement alkylique jusqu'à une viscosité appropriée, de préférence en diluant 1:3 en poids ; et
- aérosoliser la composition de gel sol diluée pour obtenir un aérosol dont la taille des gouttelettes est comprise entre 0,5 et 50 $\mu$m, de préférence comprise entre 1 et 20 $\mu$m,

dans laquelle le rapport de masse entre le tensioactif formant des micelles et la solution aqueuse acide est compris entre 1:2 et 1:2,5,
et dans laquelle la composition de type sol-gel comprend un copolymère à blocs amphiphile.

2. Composition selon la revendication 1, dans laquelle le copolymère à blocs amphiphile comprend un copolymère à blocs d'éthylène glycol et de propylène glycol, de préférence de poly(éthylène glycol)-bloc-poly(propylène glycol)-bloc-poly(éthylène glycol).

3. Composition selon la revendication 1 ou la revendication 2, dans laquelle l'orthosilicate tétra alkyle est l'orthosilicate tétra éthyle (TEOS), l'alcool faiblement alkylique est l'éthanol et la solution aqueuse acide comprend du chlorure d'hydrogène et a un pH compris entre 1,5 et 2,5, de préférence d'environ 2.

4. Procédé de fabrication d'un revêtement antireflet (AR) à haute transmittance sur un substrat pour des applications dans le domaine de l'énergie solaire ; comprenant :

- le prétraitement du substrat avec au moins un procédé approprié pour augmenter l'hydrophilie de la surface ;
- la fourniture d'une composition en aérosol selon l'une quelconque des revendications 1 à 3 ;
- l'exposition d'au moins une surface de substrat à la composition d'aérosol de sorte que la composition d'aérosol est distribuée de manière homogène à un film de couverture de surface d'une épaisseur inférieure à 300 nm ;
- la soumission du substrat avec le film de couverture de surface à une ou plusieurs étapes de séchage à des températures comprises entre la température ambiante et 100 °C ; et
- la calcination du substrat en augmentant progressivement la température jusqu'à plus de 400 °C, mais en dessous de la température du verre (Tg) du substrat, afin de former un substrat revêtu.

5. Procédé selon la revendication 4, comprenant l'exposition d'au moins un substrat avec un transport de composition d'aérosol contrôlé avec un débit de gaz ou par gravitation pendant une période de temps prédéterminée comprise entre 5 et 100 secondes, de préférence comprise entre 5 et 50 secondes.

6. Procédé selon la revendication 5, comprenant le transport de l'aérosol avec un débit compris entre 0,05 et 2 L/h, de préférence compris entre 0,5 et 2 L/h, et de préférence encore d'environ 1 L/h.

7. Substrat traité par un procédé selon l'une quelconque des revendications 4 à 6, en utilisant la composition des revendications 1 à 3 pour fabriquer un revêtement poreux antireflet sur le substrat avec une structure de pores fermée, c'est-à-dire sans pores ouverts à l'atmosphère ambiante.

8. Substrat selon la revendication 7, dans lequel le revêtement réduit la réflectance solaire pondérée selon la norme ASTM G-173 du spectre solaire direct AM 1.5 d'une surface de substrat d'au moins 1,5 %, de préférence d'au moins 2,5 %, plus préférentiellement d'au moins 3,5 %.

9. Substrat selon l'une quelconque des revendications 7 ou 8, dans lequel le revêtement a une épaisseur moyenne comprise entre 80 et 160 nm, de préférence comprise entre 100 et 140 nm, plus préférentiellement comprise entre 110 et 130 nm, et le plus préférentiellement d'environ 120 nm.

10. Substrat selon l'une quelconque des revendications 7 à 9, présentant un pic de diffraction dans l'intervalle compris entre 1,2 et 1,8 q (nm$^{-1}$), de préférence compris entre 1,3 et 1,5 (nm$^{-1}$) dans un diffractogramme issu d'une analyse GISAX.

11. Substrat selon l'une quelconque des revendications 7 à 10 constitué de verre plat à faible teneur en fer.

12. Substrat selon l'une quelconque des revendications 7 à 10 présentant un facteur de transmission *(T)* d'au moins 94 % à des longueurs d'onde comprises entre 400 et 800 nm et un facteur de transmission moyen (*T*) d'au moins 93 % à un spectre solaire pondéré selon la norme ASTM G-173 du spectre solaire direct AM 1.5.

13. Substrat selon l'une quelconque des revendications 7 à 12, présentant un pic de transmittance moyen à 535 nm, une épaisseur moyenne de revêtement comprise entre 110 et 130 nm et un revêtement ayant un indice de réfraction compris entre 1,15 et 1,35.

14. Substrat selon l'une quelconque des revendications 7 à 13, présentant un revêtement à structure mésoporeuse hexagonale, dans lequel les pores hexagonaux sont allongés dans un plan horizontal et fermés à l'air ambiant et dans lequel la porosité est comprise entre 30 et 50 %.

15. Substrat selon l'une quelconque des revendications 7 à 14, dans lequel le revêtement est hydrophile avec un angle de contact avec l'eau inférieur à 5.

16. Utilisation d'un substrat selon l'une quelconque des revendications 7 à 15 comme verre de couverture dans un capteur solaire.

Fig.1

*Gas exhaust*

*2*

*Liquid feed*

*Deposition chamber*

*Gas flow*

*Jet collision and Areosolization*

*Gravitational settling of aerosols*

*1*

TEOS +
Water
EtOH
Surfactant

*Liquid reservoir*

*nFOG™*

*3*

*4*

Plasma cleaning

Glass

Gravitational settling of aerosol

Glass

Evaporation Induced Self-assembly (EISA)

Glass

Calcination

Glass

EP 4 370 477 B1

## Fig.2A

## Fig.2B

AM 1.5

- - - - - - - - - - - - AR-coated glass

- - - - - - - - - Glass substrate

## *Fig.2c*

## *Fig.2d*

## Fig.3A

nFOG

q [nm-1]

## Fig.3B

Hex dip

q [nm-1]

## Fig.3C

Cubic

q [nm-1]

## Fig.3D

| Sample | Diffraction [nm$^{-1}$] | 2θ° | Legend |
|--------|-------------------------|------|--------|
| Cubic | 0.96 | 1.34 | ------ |
| Hex dip | 1.36 | 1.92 | --·--·-- |
| Hex nFOG | 1.44 | 2.02 | ········ |

## Hexagonal nFOG

*Fig.4A*

## Hexagonal dip

*Fig.4B*

## Cubic dip

*Fig.4C*

*Fig.4D* 0° / 90° *Fig.4E*

*Fig.4F* 0° / 90° *Fig.4G*

*Fig.4H* 0° / 90° *Fig.4I*

*Fig.5A*

*Fig.5B*

*Fig.5C*

*Fig.5D*

*Fig.6A*

*Fig.6B*

**Fig.7A**

**Fig.7B**

**Fig.7C**

**Fig.7D**

Fig.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010047656 A1

- US 6583071 B

**Non-patent literature cited in the description**

- *Journal of Coatings Technology and Research*, 2018
- **ALBERIUS et al.** *Chem. Matter*, 2002, vol. 14, 3284-3294
- **HUTCHINSON et al.** *in Thin Sold Films*, 2010, vol. 518, 2134-2140
- **GARAHAN et al.** *Journal of Applied Physics*, 2007, vol. 101, 014320

- **HUTCHINSON et al.** *Thin Solid Films*, 2010, vol. 518, 2134-2140
- **RODRIGUEZ-DE MARCOS et al.** *Opt. Mater. Express*, 2016, vol. 6, 3622-3637
- Then we used the Filmetrics online Reflectance Calculator. Filmetrics Reflectance Calculator. KLA Corporation, 2020